# EUROPEAN PATENT SPECIFICATION

(11) **EP 3 130 446 B1**
(45) Date of publication and mention of the grant of the patent: **14.11.2018**
(21) Application number: 16746357.9
(22) Date of filing: 07.01.2016
(51) Int. Cl.: B29C 47/76, B29C 47/88, B29C 47/08, B29C 47/92, B29C 41/26, B29C 41/34, C08J 9/28, B29C 47/00, B29C 47/14

(54) **DEVICE AND METHOD FOR PRODUCING MICROPOROUS POLYOLEFIN RESIN SHEET**
VORRICHTUNG UND VERFAHREN ZUR HERSTELLUNG EINER MIKROPORÖSEN POLYOLEFINHARZFOLIE
DISPOSITIF ET PROCÉDÉ DE FABRICATION DE FEUILLE DE RÉSINE DE POLYOLÉFINE MICROPOREUSE

(30) Priority: 04.02.2015 JP 2015019864
(43) Date of publication of application: 15.02.2017
(73) Proprietor: Toray Industries, Inc., Tokyo 103-8666 (JP)
(72) Inventor: KITAMURA, Osamu, Tochigi 329-2763 (JP); MAKI, Akihisa, Otsu-shi Shiga 520-8558 (JP); NOMURA, Fumiyasu, Tochigi 329-2763 (JP); KIMISHIMA, Kotaro, Tochigi 329-2763 (JP)
(74) Representative: Global IP Europe Patentanwaltskanzlei
(86) International application number: PCT/JP2016/050396
(87) International publication number: WO 2016/125526

(56) References cited:
- EP-A2- 0 879 691
- WO-A1-2014/141615
- FR-A1- 2 698 580
- JP-A- 2002 355 882
- JP-A- 2004 508 979
- JP-A- 2012 500 130
- US-A- 3 579 735
- US-A- 4 310 295
- US-A- 5 618 568

## Description

### Technical Field

The present invention relates to a production device for a microporous polyolefin resin sheet and a production method using the production device.

### Background Art

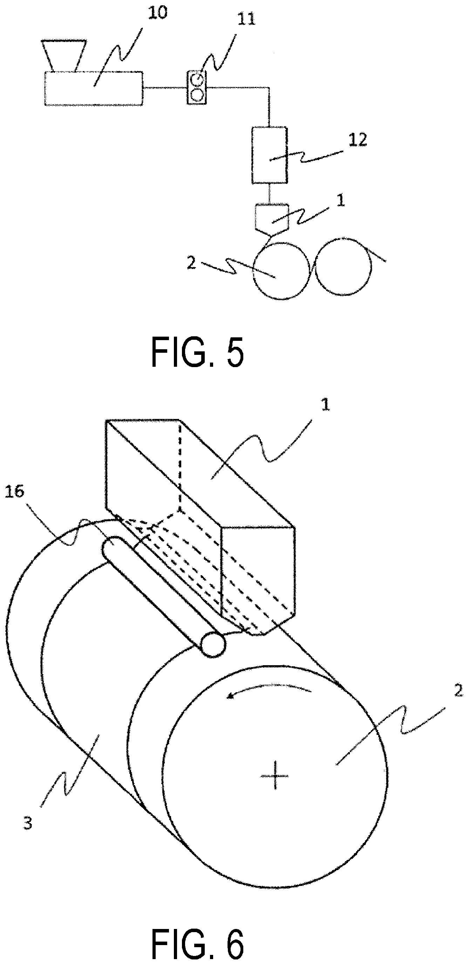

An overview of a conventional sheet production device will be given hereinafter. In a conventional sheet production device, as illustrated in FIG. 6, after a resin that has been melt-kneaded by an extruder is extrusion-molded into a sheet shape from a mouthpiece 1, the resin is drawn to a casting cooling device 2 so as to be cooled and solidified. At this time, in order to improve the formability of the sheet, the flatness of the sheet adhesion surface of the casting cooling device can be enhanced so as to produce a film with excellent surface properties (Patent Document 1).

Incidentally, increases in film forming speed have been made in order to accommodate the increasing demand for resin sheets in recent years. However, as the film forming speed increases, the air flowing into the space between the sheet and the casting cooling device increases, and the air biting pressure at the sheet arrival point on the casting cooling device becomes high. Therefore, the adhesion decreases, and when the film forming speed exceeds a certain speed, air is trapped between the sheet and the casting cooling device, which causes thickness variation and physical property variation.

As a technique for adhering a sheet to a cast surface in order to remove air flowing into the space between the sheet and the casting cooling device as the speed increases, a production method which prevents air biting defects by using a touch roll has been disclosed (Patent Document 2).

In addition, technology for aspirating the air between the sheet and the cooling device 2 with a decompression chamber in conventional solution film formation using a sheet containing volatile components has been disclosed. In this decompression chamber, turbulence in the flow of air such as an air vortex or air retention arises due to the aspiration of the decompression chamber in the vicinity of the surface corresponding to the upstream in the conveying direction of the sheet extruded from the mouthpiece 1. In order to prevent this turbulence in flow such as an air vortex or air retention, the concept of providing a wind shield for controlling the flow of air near the sheet inside the decompression chamber has been disclosed (Patent Document 3).

In addition, a unique vortex caused by the aspiration of outside air is generated at the end part of the decompression chamber. In order to prevent the generation of this vortex, the concept of providing a rectifier for regulating the flow of air flowing in from the end part of the mouthpiece 1 in the sheet width direction has been disclosed (Patent Document 4). These methods make it possible to stably adhere a sheet and to produce a satisfactory sheet.

Further, the aspirated air contains gases of low-molecular-weight components, and volatile components from diluents, additives, or the like contained in the sheet. This aspirated air is condensed and liquefied when the air comes into contact with the upper plate of the decompression chamber, which is a non-heating part separate from heating parts such as the mouthpiece of the decompression chamber. When a certain amount of this liquefied substance has accumulated, the substance drops down and contaminates the casting cooling device surface to which the sheet adheres, which leads to sheet defects. Therefore, a technique of receiving the dropped liquid and preventing the contamination of the casting cooling device surface by forming the upper plate of the decompression chamber integrally with the mouthpiece serving as a heating part and providing a receiving plate facing the casting cooling device surface on the minimum required portion of the upper plate serving as a non-heating part to provide a suction port has been disclosed (Patent Document 5).

### Citation List

### Patent Literature

US 5 618 568 A discloses a production device for a thermoplastic film. The production device comprises a dual-chamber vacuum box for pinning a thermoplastic web to a cooling roll. The device comprises an extrusion die that includes upstream and downstream lips from which a thermoplastic film or web is extruded. The web is deposited onto a cooling or casting roll. A dual-chamber vacuum box is placed immediately upstream of the die in a conveying direction of the cooling or casting roll. The dual-chamber vacuum box includes a primary vacuum chamber and a secondary vacuum chamber. The primary vacuum chamber aspirates air between the thermoplastic film or web extruded from the lips. The production device further comprises roll seals that are installed downstream from the lips in the conveying direction of the casting cooling device. The roll seals either extend over the sides of the cooling roll or terminate in close proximity to the roll face. The dual-chamber vacuum box comprises first and second baffles which equalize air flow in the primary chamber over the width thereof.

US 3 579 735 discloses an apparatus for the forming of film-forming material, wherein a stream of the material is continuously extruded onto a continuously moving casting surface from extrusion means. The extrusion means extend transversely of and over said surface and has an extrusion slot spaced from said surface. A vacuum applying device over said casting surface adjacent to said extrusion means extends along said slot adjacent to and substantially the entire width. Means are provided to seal off the suction chamber at the rear by a barrier pad assembly. The barrier pad assembly comprises a barrier or wiping pad in frictional engagement with the casting surface.

JP 2002 355882 A discloses a method for manufacturing a resin sheet and a casting apparatus for moulding a resin sheet. The casting apparatus comprises a suction chamber main body which is open towards the molten resin extruded from a die and from which the lower wall faces the cooling roll.

EP 0 879 691 A2 relates to a casting apparatus for formation of resin-made membrane which is made to be capable of accomplishing a stable pressure reduction through a suction chamber. The suction chamber is disposed independently of a die and is located to define a necessary seal gap with respect to a cooling roll.
Patent Document 1: Japanese Unexamined Patent Application Publication No. H9-1568A
Patent Document 2: Japanese Unexamined Patent Application Publication No. 2013-212673A
Patent Document 3: Japanese Unexamined Patent Application Publication No. 2000-225627A
Patent Document 4: Japanese Unexamined Patent Application Publication No. 2002-355882A
Patent Document 5: Japanese Unexamined Patent Application Publication No. 2008-188941A
Patent Document 6: US 5 618 568 A
Patent Document 7: US 3 579 735 A
Patent Document 8: JP 2002 355882 A

### Summary of Invention

### Technical Problem

However, as the speed of the casting cooling device increases, the air flowing into the space between the sheet and the casting cooling device increases in accordance with the casting speed, as described above, and the air biting pressure between the sheet and the casting cooling device becomes high. Therefore, the adhesion decreases, and air tends to become trapped when the film forming speed exceeds a certain speed. Therefore, controlling the air flowing between the sheet and the cast is a critical point for stably forming the sheet. However, with the structure disclosed in Patent Document 1, although a sheet can be formed due to the adhesion of the sheet itself on the cast surface up to a prescribed speed, the sheet is raised up due to an increase in the air biting pressure at the sheet arrival point on the casting cooling device as a result of an increase in air flowing between the sheet and the cast when the speed reaches or exceeds a certain speed, which makes sheet forming difficult. Further, in the case of a sheet, the precipitation of a diluent such as liquid paraffin between the sheet and the cast differs due to poor adhesion caused by air biting between the sheet and the cast. This is because the diluent is precipitated more in portions of the sheet adhering to the cast surface since the sheet is cooled in these portions. In portions where the diluent is precipitated, the sheet is difficult to cool due to the effects of the poor thermal conductivity of the diluent. This results in variation in the surface structure of the sheet, which affects the product.

In addition, in the structure disclosed in Patent Document 2, although air can be removed since the sheet is physically pressed into the cast by a touch roll, it becomes difficult to adjust the thickness in the sheet width direction at the mouthpiece due to fluctuation in the thickness profile caused by periodic thickness variation due to the eccentricity of the touch roll and the pressing of the touch roll into the sheet in a molten state. Further, in the case of a sheet containing volatile components, there is touch roll contamination or the like due to volatile components exuded from the sheet, which makes long-term operation difficult.

In addition, with a decompression chamber for solution film formation and a resin in a molten state containing a diluent such as liquid paraffin, the diluent evaporates from the sheet and floats freely as fine, particulate liquid droplets. Therefore, the diluent easily adheres even to a heating part and forms liquid droplets, and when a certain amount of liquid is reached, the liquid drops down and contaminates the casting cooling device surface. Further, although the airflow in the decompression chamber tends to be rectified by the structures disclosed in Patent Documents 4 and 5, there is still a gap between the casting cooling device surface and the decompression chamber, so air flowing in from this gap and air flowing in from the vicinity of the sheet interfere with one another inside the decompression chamber and cause new air flow turbulence. As a result, a certain level of improvement in thickness variation is not achieved, and liquid droplets of the liquefied diluent tend to scatter inside the decompression chamber due to air flow turbulence inside the decompression chamber, which leads to the contamination of the surface of the sheet opposing the casting cooling device due to the scattered liquid droplets.

In addition, as the film forming speed increases, the air biting temperature at the sheet arrival point on the casting cooling device also increases in step with the increase in film forming speed, so it is necessary to also reduce the suction pressure of the decompression chamber with respect to atmospheric pressure. At this time, the air aspirated by the decompression chamber increases, and the flow rate of the air flowing in from the vicinity of the sheet increases, which tends to make the air flow in the vicinity of the sheet more unstable. As a result, the vibration of the sheet due to air vibration in the vicinity of the sheet increases, and thickness variation or physical property variation increases correspondingly. Further, gases of low-molecular-weight components generated from the sheet, volatile components from diluents, additives, or the like increase due to an increase in the amount of the resin resulting from an increase in speed. In addition, as the air aspirated by the decompression chamber increases, the gas concentration of volatile components in the vicinity of the back side of the sheet - that is, the side of the surface that makes contact with the casting cooling device - decreases, which causes the amount of gases of volatile components such as diluents or additives from the sheet to further increase to maintain a balance in gas concentration. As a result, as the film forming speed increases, the amount of gases of volatile components such as diluents or additives flowing into the decompression chamber increases dramatically, and the amount of liquid droplets of volatile components adhering to the decompression chamber increases. The scattering of liquid droplets is facilitated by air flow turbulence inside the decompression chamber due to an increase in the amount of air aspirated by the decompression chamber, which leads to a further increase in the contamination of the casting cooling device surface.

The present invention was conceived in light of the problems described above, and an object of the present invention is to provide a production device for a microporous polyolefin resin sheet using a decompression chamber and a production method using the production device. The decompression chamber is capable of stable sheet forming and prevents the dropping of low-molecular-weight components of resins, diluents, or plasticizers onto a casting cooling device when gases of low-molecular-weight components of resins and volatile components of diluents or additives, which are vaporized in the vicinity of the sheet and the decompression chamber, are aspirated and liquefied into the decompression chamber, even when a prescribed casting speed is reached or exceeded.

### Solution to Problem

The production device for a microporous polyolefin resin sheet according to the present invention for solving the problems described above is a production device for a microporous polyolefin resin sheet including a mouthpiece that discharges a resin containing a mixture of a polyolefin resin and a diluent in a sheet shape, a casting cooling device that cools and solidifies a sheet discharged from the mouthpiece while conveying the sheet; and a decompression chamber that is installed upstream from the mouthpiece in a conveying direction of the casting cooling device and aspirates air between the sheet discharged from the mouthpiece and the casting cooling device. The production device further includes a rectifier that is installed downstream from a lip of the mouthpiece in the conveying direction of the casting cooling device and further outward than an end part in a width direction of the sheet discharged from the lip and blocks a gap between the sheet discharged from the mouthpiece and the cast surface. The decompression chamber includes a sealing member provided in at least a peripheral portion of a surface opposing the casting cooling device and in physical contact with the casting cooling device, and a partition plate provided across a sheet width direction in a vicinity of an opening part opposing the mouthpiece.

In a production device for a microporous polyolefin resin sheet according to a preferred mode of the present invention, the decompression chamber main body includes an upper plate inclined downward from a horizontal direction toward an upstream side in the conveying direction of the casting cooling device, an angle of inclination thereof with respect to the horizontal direction being constant or increasing toward the upstream side in the conveying direction of the casting cooling device; and a receiving plate extending from the upper plate and across an entire width of the decompression chamber main body below a suction port of the decompression chamber main body.

In a production device for a microporous polyolefin resin sheet according to a preferred mode of the present invention, the sealing member is a porous resin or rubber.

A production method for a microporous polyolefin resin sheet according to the present invention for solving the problems described above includes the steps of: discharging a molten resin from a mouthpiece onto a casting cooling device in a sheet shape while using the production device for a microporous polyolefin resin sheet according to the present invention; aspirating air between a sheet discharged from the mouthpiece and a casting cooling device with a decompression chamber main body to adhere the sheet and the casting cooling device; and cooling and solidifying the sheet while conveying the sheet with the casting cooling device.

The production method for a microporous polyolefin resin sheet according to the present invention for solving the problems described above includes the steps of: discharging a resin containing a mixture of a polyolefin resin and a diluent from a mouthpiece in a sheet shape; cooling and solidifying a sheet discharged from the mouthpiece while conveying the sheet with a casting cooling device at a conveying speed of 3 m/min or greater; and adhering the sheet to the casting cooling device with a decompression chamber main body that aspirates air between the sheet discharged from the mouthpiece and the casting cooling device on an upstream side from the mouthpiece in a conveying direction of the casting cooling device.

In the present invention, a "lip" refers to a slit opening part for extruding and forming a molten resin into a sheet shape from the mouthpiece.

A "lengthwise direction" refers to the lengthwise direction of the sheet, and a "width direction" refers to the width direction of the sheet. "Upstream" refers to upstream in the conveying direction of the cast sheet.

"Downstream" refers to downstream in the conveying direction of the cast sheet.

The "surface of the decompression chamber main body opposing the casting cooling device" refers to a surface on the case side opposing the casting cooling device surface at a gap where an inflow of air in the peripheral portion of the case of the decompression chamber may be generated between the case of the decompression chamber and the casting cooling device (however, this excludes the decompression chamber opening part on the upstream part of the sheet).

### Advantageous Effects of Invention

With the present invention, it is possible to stably cast a polyolefin resin sheet containing a diluent discharged from a mouthpiece onto a casting cooling device surface by aspirating air flowing into a gap at the adhesion part between a sheet and a casting cooling device with a decompression chamber, even when a prescribed casting speed is reached or exceeded.

### Brief Description of Drawings

FIG. 1 is a schematic diagram of a polyolefin resin sheet production device according to an embodiment of the present invention.
FIG. 2 is a top view of the polyolefin resin sheet production device in FIG. 1.
FIG. 3 is a side view of the polyolefin resin sheet production device in FIG. 1.
FIG. 4 is a cross-sectional view along A-A of the polyolefin resin sheet production device in FIG. 2.
FIG. 5 is a schematic diagram illustrating a polyolefin resin sheet production device.
FIG. 6 is a schematic diagram of a conventional sheet production device.

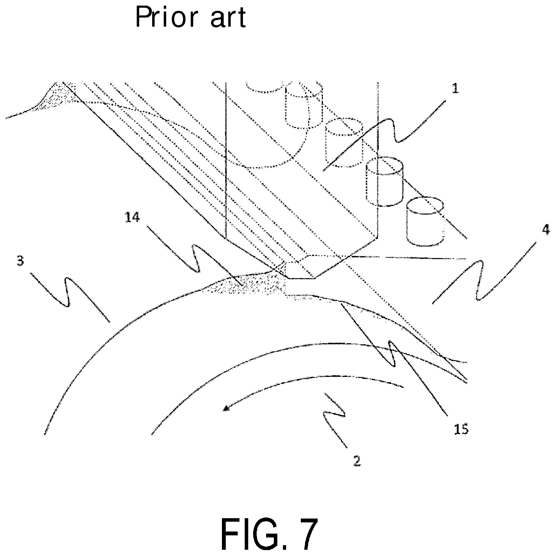

FIG. 7 is a schematic diagram of a conventional sheet production device using a decompression chamber.

### Description of Embodiments

These embodiments will be described in detail hereinafter, but the present invention is not limited to the embodiments, including the working examples below.

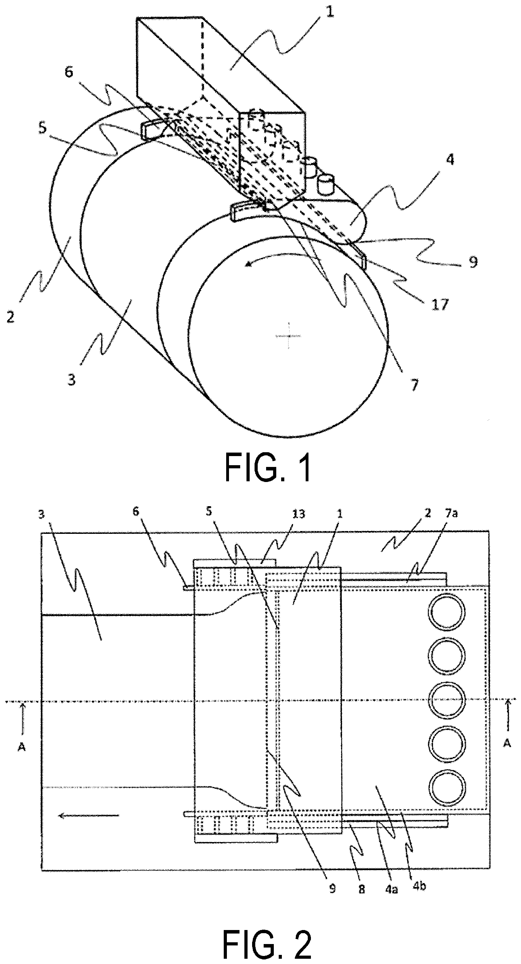

FIG. 1 is a schematic diagram of a polyolefin resin sheet production device according to an embodiment of the present invention. As illustrated in FIG. 1, the sheet production device includes: a mouthpiece 1 that discharges a resin melted by an extruder in a sheet shape, and a casting cooling device 2 that cools and solidifies a sheet 3 discharged from the mouthpiece 1 while drawing and conveying the sheet 3. The discharged sheet is cast onto a traveling casting cooling device surface. In addition, when a sheet containing a diluent is cooled by the casting cooling device, at least a diluent such as liquid paraffin remains on the cast surface after the sheet is peeled from the casting cooling device. Therefore, the diluent remaining on the cast surface is scraped off by at least one or more scraping devices 17 disposed so as to make contact with the casting cooling device in the width direction. The casting cooling device may be a roll or a belt, and the scraping device may be a rubber sheet-like scraper or a resin doctor blade.

A decompression chamber 4 having a shape following the outer peripheral surface of the casting cooling device 2 is provided adjacent to the mouthpiece 1 on the back side of the mouthpiece 1 - that is, upstream in the sheet conveying direction from the arrival point of the sheet 3 on the cast surface. A negative pressure region is generated by this decompression chamber 4 on the back side of the sheet 3 - that is, the side of the sheet 3 making contact with the casting cooling device 2. The decompression chamber main body 4 has an opening part and a decompression chamber. The opening part is formed across the entire width of the sheet proximate to the portion where the sheet 3 begins to adhere to the outer peripheral surface of the casting cooling device 2. In addition, the air inside the decompression chamber is aspirated by an aspiration device, and the air of the adhesion part between the sheet and the casting cooling device 2 is thereby aspirated from the opening part of the decompression chamber main body 4. As a result, the adhesion part is decompressed, and air trapped between the sheet and the casting cooling device 2 is removed. In addition, by controlling the decompression level to a prescribed level, it is possible to stably adhere the sheet 3 formed from a molten resin to the casting cooling device 2. This decompression chamber constitutes an adhesion means.

At this time, the decompression level inside the decompression chamber main body 4 is preferably controlled to a prescribed level in accordance with the viscosity of the molten resin, the thickness of the sheet, the sheet conveying speed of the casting cooling device, and the like. The suction pressure inside the decompression chamber main body 4 with respect to atmospheric pressure is preferably in the range of not lower than -2,500 Pa to not higher than -20 Pa. The lower limit of the suction pressure inside the decompression chamber main body 4 with respect to atmospheric pressure is more preferably not lower than -1,500 Pa, and the upper limit is more preferably not higher than -50 Pa.

The air aspirated by the decompression chamber 4 contains gases of low-molecular-weight components contained in the sheet and volatile components from diluents or the like with high vaporizability or condensability, and particulate liquids. These volatile components are easily condensed when the temperature decreases. In addition, when producing a sheet containing a diluent, in particular, a diluent such as liquid paraffin contained in the sheet floats freely as particulate liquid droplets and therefore easily adhere to the device, regardless of whether the object with which the liquid droplets make contact is a heating part. When a certain amount of this adhered substance has accumulated, the substance drops down and contaminates the casting cooling device surface 2, thereby contaminating the surface of the sheet opposing the casting cooling device. As described below, the sheet production device of the present invention is also provided with a means for preventing such contamination.

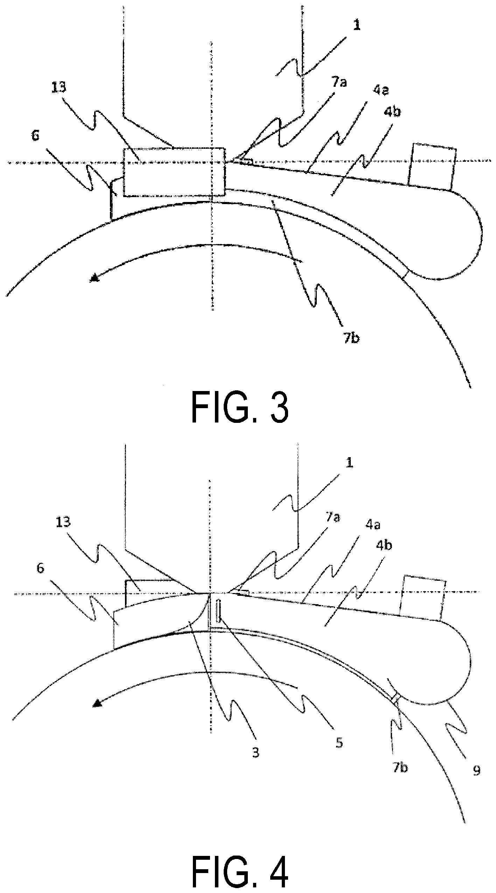

FIG. 2 is a top view of FIG. 1. FIG. 3 is a side view of FIG. 1. FIG. 4 is a cross-sectional view of FIG. 2 along A-A.

As illustrated in FIGS. 2 to 4, in this embodiment, when the decompression chamber main body 4 is fixed at a prescribed position, the surface of the decompression chamber main body 4 opposing the casting cooling device 2 is disposed at a position with a slight distance away from the casting cooling device 2 so that excess air does not enter the decompression chamber main body 4 at the time of aspiration. In addition, a sealing member 7b that prevents the inflow of air from this slight gap is provided in the peripheral portion of this surface of the decompression chamber main body 4. This sealing member is sandwiched between a side surface plate of the decompression chamber main body 4 and a pressing plate and is fastened, fixed, and attached by bolts at a prescribed spacing. Note that the attachment method described above is merely an example, and a method differing from the attachment method described above may be used. For example, a groove may be defined in the surface of the decompression chamber main body 4 opposing the casting cooling device 2, and the sealing member may be embedded in this groove. Alternatively, a groove may be defined in the sealing member 7b, and the sealing member 7b may be fitted into the case of the decompression chamber main body 4. Alternatively, holes for fixing bolts may be formed in the sealing member 7b, and the sealing member 7b may be fixed with bolts using the holes and bolt holes formed in the surface of the decompression chamber main body 4 opposing the casting cooling device 2.

As described above, in the case of a sheet containing a diluent, the diluent remains on the cast surface after the sheet is peeled from the casting cooling device 2, and a thin liquid film of the diluent still remains on the surface layer of the cast surface, even if a scraping device is used. Scratching occurs on the dried cast surface as a result of the wear of the sealing member and the biting of the sealing member by abrasion powder, but this thin liquid film that remains makes it possible to reduce friction by enhancing the slippage of the sealing member and to prevent damage to the sealing member. Further, the air flow inside the decompression chamber is rectified by preventing the inflow of air from the cast surface, which makes it possible to prevent the dropping of liquid droplets of a diluent or the like deposited inside the decompression chamber due to fluctuation in air flow.

In order to reduce the rotational torque load of the casting cooling device 2, the sealing member 7b is preferably a porous resin or rubber which has a small compressive load and can ensure the sealing of the seal surface with a low load. Examples of preferable rubber materials include NBR, CR, MSR, fluorine, butyl, urethane, and silicone foams, and a closed-pore foam is more preferable. Even more preferable is a non-conductive silicone sponge rubber which does not impart electrical conductivity to the product even if the product is contaminated with an abrasive powder. In addition, the hardness is preferably a Shore E hardness of from 10 to 35 capable of providing a seal with a low load. The hardness is more preferably a Shore E hardness of from 25 to 35 yielding a small amount of deformation of the contact surface, even when undergoing a shearing force due to the rotation of the casting cooling device.

The pressing force of the sealing member 7b against the casting cooling device 2 is preferably not less than 2.942 N (0.3 kgf) in order to maintain a seal even at the time of decompression. The amount of compression of the sealing member 7b into the casting cooling device 2 is preferably kept at not less than 0.5 mm in order to prevent the deterioration of the seal due to wear at the time of film formation. The amount of compression is more preferably from 0.5 to 1.5 mm in order to suppress changes in the shape of the compression margin.

In addition, a sealing member 7a in contact with the mouthpiece 1 is disposed on the downstream edge of an upper plate 4a of the decompression chamber main body 4 in the conveying direction. At this time, the sealing member 7a is preferably a porous resin or rubber. Note that the attachment method described above is merely an example, and a method differing from the attachment method described above may be used. For example, the edge of the upper plate 4a may be attached to the main body of the mouthpiece 1 by welding, or the mouthpiece 1 and the edge of the upper plate 4a may be fixed with a bracket. Alternatively, the upper plate may be formed integrally with the mouthpiece 1.

In addition, a partition plate 5 is formed in a sheet shape extending in the width direction of the sheet and is preferably formed from one side surface plate to the other side surface plate inside the decompression chamber 4 so as to block the vicinity of the opening part. Further, the partition plate 5 is preferably disposed so that a gap is defined between the upper surface of the partition plate 5 and the lower surface of the mouthpiece 1, and the gap is preferably set to not less than 1 mm and more preferably not less than 5 mm. Air aspirated from the opening part of the decompression chamber 4 forms a vortex and accumulates in the space defined by the mouthpiece 1, the partition plate 5, and the sheet. The accumulation of this air leads to fluctuations in the sheet. It is possible to prevent the accumulation of air by defining a gap between the upper surface of the partition plate 5 and the lower surface of the mouthpiece 1. In addition, the partition plate 5 is preferably disposed so that a space is defined between the lower surface of the partition plate 5 and the surface of the casting cooling device 2, and the gap is preferably set to not less than 1 mm and more preferably not less than 5 mm. This makes it possible to establish a state in which the flow fields of both the accompanying air flow caused by the rotation of the casting cooling device and the flow of air caused by aspiration by the decompression chamber are rectified without opposing one another. The partition plate 5 is preferably at a position from 1 to 10 mm and more preferably from 1 to 5 mm on the upstream side from the mouthpiece lip. As a result, the spatial area formed by the partition plate 5, the sheet, and the casting cooling device 2 becomes small, which makes it possible to suppress the formation of an air vortex and to reduce the vibration of the sheet.

Further, on the downstream side from the lip of the mouthpiece 1 in the conveying direction of the casting cooling device 2 and further outward in the sheet width direction from the positions of both ends of the sheet 3 discharged from the mouthpiece 1, rectifiers 6 provided so as to block the gap between the sheet 3 discharged from the mouthpiece 1 and the casting cooling device 2 are disposed on both end parts in the width direction of the mouthpiece. Screw holes are formed in the side plate of the mouthpiece 1. The rectifier 6 is held by a bracket 13 and attached to the mouthpiece 1 by passing bolts into holes formed in the bracket 13 and tightening the bolts into the screw holes of the side plate of the mouthpiece.

Note that the attachment method described above is merely an example, and a method differing from the attachment method described above may be used. For example, the bracket 13 may be attached to the decompression chamber main body 4. Alternatively, attachment may be achieved by the decompression chamber 4 or the mouthpiece 1 and a bracket.

In addition, the upper plate 4a of the decompression chamber main body 4 is inclined downward from the horizontal direction toward the upstream side in the sheet conveying direction. The angle of inclination is preferably not less than 5 degrees and more preferably not less than 10 degrees downward from the horizontal direction across the entire upper plate 4a. This forcibly directs condensed or adhered liquid droplets to a receiving plate 9 described below and prevents the accumulation of liquid droplets on the upper plate. In addition, when there is a portion in which the angle of inclination of the upper plate part 4a becomes smaller at an intermediate point toward the upstream side in the sheet conveying direction, the flow rate of liquid droplets decreases in this portion, and liquid droplets flowing from the downstream side in the sheet conveying direction catch up and grow larger, which causes the liquid droplets to tend to drop down easily. Therefore, the angle of inclination is preferably constant or increasing toward the upstream side in the conveying direction. In addition, the lower edge of the upper plate 4a on the downstream side in the sheet conveying direction is preferably connected to an extension of the lower surface of the lip of the mouthpiece. Further, the lower surface corresponding to the decompression region side of the upper plate 4a preferably has a large surface energy in order to prevent liquid droplets from growing into puddles that would drop down. The method for achieving this is to roughen the surface on the decompression region side of the upper plate by sand blasting. The surface roughness is preferably such that the center line average roughness (Ra) is from 0.2 to 20 µm and the 10-spot average height (Rz) is from 1 to 120 µm in accordance with JIS B0601-1994. The method described above is merely an example, and a method differing from the method described above may be used. For example, there is a method of enhancing the adaptability between the case surface of the decompression chamber and the liquid droplets by performing lipophilic or hydrophilic treatment.

A plurality of suction ports are provided in the upstream part of the upper plate of the decompression chamber main body 4 in order to make the aspirated air uniform in the sheet width direction, and a valve for adjusting the flow of air from each suction port is provided between the suction ports and the aspiration device. The aspiration device for aspirating the air inside the decompression chamber main body 4 may be a blower or a vacuum pump. In addition, a receiving plate 9 extending from the upper plate 4a and across the entire nozzle width is provided below the suction ports of the decompression chamber. The shape of the receiving plate 9 is preferably a U-shape. The U-shape may be a shape having at least two or more bend points from the upper plate, a curved shape such as a C-shape, or a shape combining these two shapes. In addition, at least part of the surface opposing the cast surface preferably faces upward from the horizontal direction toward the downstream side of the sheet conveying direction. Further, the surface of the receiving plate 9 opposing the casting cooling device 2 is preferably longer on the downstream side in the sheet conveying direction than directly below the suction ports. This makes it possible to capture the aforementioned liquid droplets deposited on the upper plate and to capture liquid droplets deposited beyond the suction ports after flowing back due to their own weight, which makes it possible to prevent the contamination of the casting cooling device surface.

In addition, unnecessary protrusions are preferably removed from the wall surfaces on the decompression region side of the decompression chamber main body 4 so that the tip surfaces of bolts or the like required for the fixing of the sealing member or the like are aligned with the surfaces of the inside walls.

The structure described above makes it possible to dramatically reduce the suction pressure from atmospheric pressure in the decompression chamber in step with increases in speed. This makes it possible to completely prevent liquid droplets from accumulating or growing and dropping onto the casting cooling device surface in locations where the liquid droplets may contaminate the cooling device surface, even when the volatilization of diluents or the like from the back side of the sheet becomes excessively large and liquid droplets adhering to the inside of the decompression chamber increase, which in turn makes it possible to uniformly and continuously perform sheet forming.

In the present invention, a resin of a polyolefin solution prepared by mixing a polyolefin resin such as polyethylene, polypropylene, polystyrene, or polymethylpentene with a diluent and heat-melting the mixture may be used as the resin supplied to the mouthpiece 1. The diluent determines the structure for the micropore formation of the microporous plastic film and contributes to the improvement of the stretchability when stretching the film (indicating a decrease in unevenness of a stretching ratio for expressing strength, for example).

The diluent is not particularly limited as long as the diluent is a substance which can be mixed with or dissolved in a polyolefin resin. The diluent may also be mixed with a solvent that is mixed with the polyolefin in the melt-kneaded state, but is a solid solvent at room temperature. Examples of such a solid diluent include stearyl alcohol, ceryl alcohol, paraffin wax, and the like. The diluent is preferably a liquid at room temperature in order to prevent unevenness or the like at the time of stretching and out of consideration of subsequent coating. Examples of liquid diluents include aliphatic, cycloaliphatic, or aromatic hydrocarbons such as nonane, decane, decalin, paraxylene, undecane, dodecane, and liquid paraffin, mineral oil fraction of distillates having boiling points in the boiling point ranges of these compounds, and phthalic acid esters which are liquids at room temperature such as dibutylphthlate and dioctylphthalate. In order to obtain a gel-like sheet having a stable liquid diluent content, it is more preferable to use liquid paraffin. The viscosity of the liquid diluent is preferably from 0.2 to 2 cm2/s (20 to 200 cSt) at 40 °C, for example.

From the perspective of enhancing the formability of the extrudate, the compounding ratio of the polyolefin resin and the diluent is preferably such that the polyolefin resin constitutes from 10 to 50 mass% on the basis of a total of 100 mass% of the polyolefin resin and the diluent. The uniform melt-kneading process of the polyolefin solution is not particularly limited, but examples include a calender, various mixers, and an extruder having a screw.

### Working Examples

The results of producing a polyolefin resin sheet using the sheet production device described below will be described hereinafter.

### Working Example 1

The specific sheet production method in this embodiment is as follows.

### (1) Sheet material:

- High-density polyethylene (HDPE), viscosity: 1,000 Pa • s. Here, the viscosity was measured with the method of JIS K7117-2 under conditions with a shearing rate of 100/s and a temperature of 200 °C.
- Liquid paraffin (LP), kinematic viscosity: 51 cSt (mm²/s at 40 °C).

### (2) Preparation:

After the sheet material was dried, the sheet material was supplied to an extruder, passed through a gear pump and a filter, and supplied to a sheet forming mouthpiece. The device temperature up to the mouthpiece was set to 230 °C.

### (3) Sheet forming mouthpiece:

A mouthpiece with a slit width of 300 mm was used, and the resin described above was discharged at a flow rate of 70 kg/hr.

The LP concentration in the resin was 70 mass%, and 49 kg/hr was LP. In addition, although also dependent on the sheet width and the decompression level, approximately 0.1% of the LP with respect to the resin flow rate is volatilized from the sheet, and approximately 1.7 kg of volatilized LP is aspirated into the decompression chamber together with ambient air per day.

### (4) Casting cooling device

A sheet forming roll with a mirror surface was used as a casting cooling device. After the composition was extruded into a sheet shape from the sheet forming mouthpiece, the roll temperature was set to 35 °C with a cooling roll, and the composition was formed at a casting speed of 3 m/min.

### (5) Decompression chamber

A decompression chamber having a clearance of 40 mm between the sheet forming mouthpiece and the sheet forming roll and having a constant angle of inclination of the upper plate of the decompression chamber of 10 degrees downward from the horizontal direction across the entire upper plate was used. As illustrated in FIG. 2, the installation position of a rectifier was adjusted such that the rectifier is positioned on an extension of the side surface of the decompression chamber main body, and the decompression chamber was installed after the lip position of the mouthpiece was set to the top of the roll. Stretchable PTFE was used as a sealing member for the mouthpiece, and a non-electrically conductive silicone sponge rubber having a hardness (type E) of 30 degrees was used as a sealing member for the cast surface. The decompression level was set to -100 Pa with respect to atmospheric pressure.

As a result of forming a film, a stable running state was achieved for the sheet on the cast surface. The thickness variation R was not greater than 2.5%, and there were no appearance defects such as striped patterns. In addition, although a small amount of liquid dripping from the decompression chamber was observed in the vicinity of the sheet edge, the dropping was not significant enough to affect film formation, and a sheet having good quality was obtained.

Here, the "thickness variation R" refers to a ratio determined by dividing a value determined by subtracting the minimum sheet thickness from the maximum sheet thickness in the sheet conveying direction by the average sheet thickness.

In addition, a "striped pattern" means that the sheet discharged from the mouthpiece is subjected to air vibration due to the effects of ambient air flow caused by aspiration by the decompression chamber prior to arriving in the casting cooling device, so periodic thickness variation occurs in the sheet conveying direction on the surface of the sheet on the casting cooling device. This thickness variation leads to a problem from the perspective of quality since it forms highly visible and conspicuous stripes running in the sheet width direction on the sheet surface which is periodical in the sheet conveying direction.

### Working Example 2

The specific sheet production method in this embodiment is as follows.

### (1) Sheet material:

The same material as in Working Example 1 was used.

### (2) Preparation:

Preparation was performed in the same manner as in Working Example 1 with the exception that the device temperature up to the mouthpiece was set to 200 °C.

### (3) Sheet forming mouthpiece:

A mouthpiece with a slit width of 300 mm was used, and the resin described above was discharged at a flow rate of 250 kg/hr. The LP concentration in the resin was 70 mass%, and 175 kg/hr was LP. In addition, approximately 0.1% of the LP with respect to the resin flow rate is volatilized from the sheet as described above, and approximately 6.0 kg of volatilized LP is aspirated into the decompression chamber together with ambient air per day.

### (4) Casting cooling device

The casting cooling device was the same as that of Working Example 1 with the exception that the casting speed was set to 10 m/min.

### (5) Decompression chamber

The same decompression chamber as in Working Example 1 was used. In addition, the decompression level was set to -500 Pa with respect to atmospheric pressure.

As a result of forming a film, a stable running state was achieved for the sheet on the cast surface, even at a casting speed of 10 m/min. The thickness variation R was not greater than 1.5%, and there were no appearance defects such as dripping liquid biting between the sheet and the roll or striped patterns, resulting in a sheet having good quality. Even when the decompression level of the decompression chamber was reduced under high-speed conditions, it was possible to rectify the high-speed air flow inside the decompression chamber, and it was thereby confirmed that air vibration on the back surface of the sheet is stable and that the arrival point where the sheet arrives at the casting cooling device is extremely stable.

In addition, when the inside of the decompression chamber was confirmed after the completion of film formation, although a small amount of liquid droplets was observed on the upper plate, the liquid droplets did not grow to a size significant enough to drop down, and it was confirmed that the liquid droplets slowly flow over the upper plate toward the receiving plate as time passes without dropping onto the casting cooling device.

### Working Example 3

The specific sheet production method in this embodiment is as follows.

### (1) Sheet material:

The same material as in Working Example 1 was used.

### (2) Preparation:

Preparation was performed in the same manner as in Working Example 1 with the exception that the device temperature up to the mouthpiece was set to 200 °C.

### (3) Sheet forming mouthpiece:

A mouthpiece with a slit width of 400 mm was used. The resin described above was discharged from the mouthpiece at a flow rate of 300 kg/hr. The LP concentration in the resin was 70 mass%, and 210 kg/hr consisted of LP. In addition, approximately 0.1% of the LP with respect to the resin flow rate is volatilized from the sheet as described above, and approximately 7.2 kg of volatilized LP is aspirated into the decompression chamber together with ambient air per day.

### (4) Casting cooling device

The casting cooling device was the same as that of Working Example 1 with the exception that the casting speed was set to 16 m/min.

### (5) Decompression chamber

The same decompression chamber as that of Working Example 1 was used with the exception that the decompression region surface was roughened by sand blasting. The decompression level was set to -1200 Pa with respect to atmospheric pressure.

As a result of forming a film, a stable running state was achieved for the sheet on the cast surface, even at a casting speed of 16 m/min. The thickness variation R was not greater than 1.5%, and there were no appearance defects such as dripping liquid biting between the sheet and the roll or striped patterns, resulting in a sheet having good quality. As described above, when the decompression level of the decompression chamber was reduced under high-speed conditions, it was possible to rectify the high-speed air flow inside the decompression chamber, and it was thereby confirmed that air vibration on the back surface of the sheet is stable and that the arrival point where the sheet arrives at the casting cooling device is extremely stable. In addition, when the inside of the decompression chamber was confirmed after the completion of film formation, it was confirmed that the diluent liquid adapted to the upper plate and did not grow into liquid droplets whatsoever on the decompression region side of the upper plate.

### Comparative Example 1

The specific sheet production method in this embodiment is as follows.

### (1) Sheet material:

The same material as in Working Example 1 was used.

### (2) Preparation:

Preparation was performed in the same manner as in Working Example 1 with the exception that the device temperature up to the mouthpiece was set to 220 °C.

### (3) Sheet forming mouthpiece:

A mouthpiece with a slit width of 300 mm was used, and the resin described above was discharged at a flow rate of 100 kg/hr. The LP concentration in the resin was 70 mass%, and 70 kg/hr consisted of LP. In addition, approximately 0.1% of the LP with respect to the resin flow rate is volatilized from the sheet as described above, and approximately 2.4 kg of volatilized LP is aspirated into the decompression chamber together with ambient air per day.

### (4) Casting cooling device

The casting cooling device was the same as that of Working Example 1.

### (5) Decompression chamber

A decompression chamber was not installed.

As a result of forming a film, when the casting speed was set to 3 m/min, there was a large amount of air biting between the sheet and the cast surface in the form of bamboo blinds in the sheet conveying direction over the entire sheet width direction, and the sheet forming was poor, so it was not possible to evaluate the sheet at a casting speed of 3 m/min or greater.

### Comparative Example 2

The specific sheet production method in this embodiment is as follows.

### (1) Sheet material:

The same material as in Working Example 1 was used.

### (2) Preparation:

Preparation was performed in the same manner as in Working Example 1 with the exception that the device temperature up to the mouthpiece was set to 220 °C.

### (3) Sheet forming mouthpiece:

A mouthpiece with a slit width of 300 mm was used, and the resin described above was discharged at a flow rate of 100 kg/hr.

The LP concentration in the resin was 70 mass%, and 70 kg/hr consisted of LP. In addition, approximately 0.1% of the LP with respect to the resin flow rate is volatilized from the sheet as described above, and approximately 2.4 kg of volatilized LP is aspirated into the decompression chamber together with ambient air per day.

### (4) Casting cooling device

The casting cooling device was the same as that of Working Example 1.

### (5) Decompression chamber

The same decompression chamber as that of Working Example 3 was used with the exception that a rectifier was not installed. The decompression level was set to -600 Pa with respect to atmospheric pressure.

As a result of forming a film, the quality was poor due to large vibration in the sheet between the mouthpiece and the casting cooling device and the generation of striped patterns, so it was not possible to form a product.

### Comparative Example 3

The specific sheet production method in this embodiment is as follows.

### (1) Sheet material:

The same material as in Working Example 1 was used.

### (2) Preparation:

Preparation was performed in the same manner as in Working Example 1 with the exception that the device temperature up to the mouthpiece was set to 220 °C.

### (3) Sheet forming mouthpiece:

A mouthpiece with a slit width of 300 mm was used, and the resin described above was discharged at a flow rate of 100 kg/hr.

The LP concentration in the resin was 70 mass%, and 70 kg/hr was LP. In addition, approximately 0.1% of the LP with respect to the resin flow rate is volatilized from the sheet as described above, and approximately 2.4 kg of volatilized LP is aspirated into the decompression chamber together with ambient air per day.

### (4) Casting cooling device

The casting cooling device was the same as that of Working Example 1.

### (5) Decompression chamber

The same decompression chamber as that of Working Example 3 was used with the exception that a partition plate was not installed. The decompression level was set to -1100 Pa with respect to atmospheric pressure.

As a result of forming a film, the quality was poor due to large fluctuation in the pressure inside the decompression chamber and, as a result, large vibration in the sheet between the mouthpiece and the casting cooling device and the generation of striped patterns, so it was not possible to form a product.

### Comparative Example 4

The specific sheet production method in this embodiment is as follows.

### (1) Sheet material:

The same material as in Working Example 1 was used.

### (2) Preparation:

Preparation was performed in the same manner as in Working Example 1 with the exception that the device temperature up to the mouthpiece was set to 220 °C.

### (3) Sheet forming mouthpiece:

A mouthpiece with a slit width of 300 mm was used, and the resin described above was discharged at a flow rate of 100 kg/hr.

The LP concentration in the resin was 70 mass%, and 70 kg/hr was LP. In addition, approximately 0.1% of the LP with respect to the resin flow rate is volatilized from the sheet as described above, and approximately 2.4 kg of volatilized LP is aspirated into the decompression chamber together with ambient air per day.

### (4) Casting cooling device

The casting cooling device was the same as that of Working Example 1.

### (5) Decompression chamber

The same decompression chamber as that of Working Example 3 was used with the exception that a sealing member between the decompression chamber and the roll was not installed. The decompression level was set to -1700 Pa with respect to atmospheric pressure.

As a result of forming a film, the quality was poor due to turbulence in the air flow inside the decompression chamber caused by air flowing in from the periphery of the case of the decompression chamber, fluctuation in the pressure inside the decompression chamber, thickness variation R of 10% or greater, scattering of liquid paraffin droplets condensed inside the decompression chamber due to the inflow of air, and liquid dripping onto the roll, so it was not possible to form a product.

### Industrial Applicability

The present invention is not limited to a polyolefin resin sheet production method and may also be applied to a solution resin sheet production method, die coating, or the like, but the scope of application is not limited to these examples.

### Reference Signs List

1 Mouthpiece
2 Casting cooling device
3 Sheet
4 Decompression chamber
4a Upper plate
4b Side surface plate
5 Partition plate
6 Rectifier
7 Sealing member
7a Sealing member (mouthpiece part)
7b Sealing member (casting cooling device part)
8 Pressing plate
9 Receiving plate
10 Extruder
11 Gear pump
12 Filter
13 Bracket
14 Gap between sheet and casting cooling device
15 Gap between decompression chamber and casting cooling device
16 Touch roll
17 Scraping device

## Claims

1. A production device for a microporous polyolefin resin sheet comprising:
a mouthpiece (1) for discharging a resin containing a mixture of a polyolefin resin and a diluent in a sheet shape;
a casting cooling device (2) for cooling and solidifying a sheet (3) discharged from the mouthpiece while conveying the sheet (3); and
a decompression chamber (4) that is installed upstream from the mouthpiece (1) in a conveying direction of the casting cooling device (2) for aspirating air between the sheet (3) discharged from the mouthpiece (1) and the casting cooling device (2), the decompression chamber (4) comprising a partition plate (5) provided across a sheet width direction in a vicinity of an opening part opposing the mouthpiece (1);
**characterised in that**
the production device further comprises
a rectifier (6) that is installed downstream from a lip of the mouthpiece (1) in the conveying direction of the casting cooling device (2) and further outward than an end part in a width direction of the sheet (3) discharged from the lip for blocking a gap between the sheet (3) discharged from the mouthpiece (1) and a cast surface; and
**in that** the decompression chamber further comprises a seaiing member (7b) provided in at least a peripheral portion of a surface opposing the casting cooling device (2) and in physical contact with the casting cooling device (2).

2. The production device for a microporous polyolefin resin sheet according to claim 1, wherein the decompression chamber main body comprises:
an upper plate (4a) inclined downward from a horizontal direction toward an upstream side in the conveying direction of the casting cooling device (2), an angle of inclination thereof with respect to the horizontal direction being constant or increasing toward the upstream side in the conveying direction of the casting cooling device (2); and
a receiving plate (9) extending from the upper plate (4a) and across an entire width of the decompression chamber main body below a suction port of the decompression chamber main body.

3. The production device for a microporous polyolefin resin sheet according to claim 1 or 2, wherein the sealing member (7b) is a porous resin or rubber.

4. A production method for a microporous polyolefin resin sheet comprising the steps of:
discharging a molten resin from the mouthpiece (1) onto the casting cooling device (2) in a sheet shape while using the production device for a microporous polyolefin resin sheet described in any one of claims 1 to 3;
aspirating air between a sheet (3) discharged from the mouthpiece (1) and the casting cooling device (2) with the decompression chamber main body to adhere the sheet (3) and the casting cooling device (2); and
cooling and solidifying the sheet (3) while conveying the sheet (3) with the casting cooling device (2).

5. A production method for a microporous polyolefin resin sheet
according to claim 4, wherein the resin contains a mixture of a polyolefin resin and a diluent, and the conveying speed is 3 m/min or greater.

## Patentansprüche

1. Herstellungsvorrichtung für eine mikroporöse Polyolefinharzfolie mit:
einem Mundstück (1) zum Ausstoßen eines Harzes, das eine Mischung eines Polyolefinharzes und eines Verdünnungsmittels enthält, in einer Folienform;
einer Gießkühlvorrichtung (2) zum Abkühlen und Verfestigen einer aus dem Mundstück ausgestoßenen Folie (3), während die Folie (3) befördert wird; und
einer Dekompressionskammer (4), die in eine Förderrichtung der Gießkühlvorrichtung (2) dem Mundstück (1) vorgeschaltet angebracht ist, zum Absaugen von Luft zwischen der aus dem Mundstück (1) ausgestoßenen Folie (3) und der Gießkühlvorrichtung (2), wobei die Dekompressionskammer (4) eine Trennplatte (5) aufweist, die quer zu einer Folienbreitenrichtung in einer Umgebung eines Öffnungsteils vorgesehen ist, das dem Mundstück (1) gegenüberliegt;
**dadurch gekennzeichnet, dass**
die Herstellungsvorrichtung ferner einen Rektifizierapparat (6) aufweist, der in die Förderrichtung der Gießkühlvorrichtung (2) nachgeschaltet von einer Lippe des Mundstücks (1) und weiter außen als ein Endteil in eine Breitenrichtung der aus der Lippe ausgestoßenen Folie (3) zum Versperren eines Spalts zwischen der aus dem Mundstück (1) ausgestoßenen Folie (3) und einer Gießfläche angebracht ist; und
dass die Dekompressionskammer ferner ein Dichtungselement (7b) aufweist, das in mindestens einem Umfangsabschnitt einer Oberfläche, die der Gießkühlvorrichtung (2) gegenüberliegt und in physikalischem Kontakt mit der Gießkühlvorrichtung (2) vorgesehen ist.

2. Herstellungsvorrichtung für eine mikroporöse Polyolefinharzfolie nach Anspruch 1, wobei der Dekompressionskammer-Hauptkörper aufweist:
eine obere Platte (4a), die aus einer horizontalen Richtung zu einer in die Förderrichtung der Gießkühlvorrichtung (2) vorgeschalteten Seite nach unten geneigt ist, wobei deren Neigungswinkel bezüglich der horizontalen Richtung konstant ist oder zu der in die Förderrichtung der Gießkühlvorrichtung (2) vorgeschalteten Seite zunimmt; und
eine Aufnahmeplatte (9), die sich von der oberen Platte (4a) und über eine gesamte Breite des Dekompressionskammer-Hauptkörpers unter einer Ansaugöffnung des Dekompressionskammer-Hauptkörpers erstreckt.

3. Herstellungsvorrichtung für eine mikroporöse Polyolefinharzfolie nach Anspruch 1 oder 2, wobei das Dichtungselement (7b) ein poröses Harz oder Gummi ist.

4. Herstellungsverfahren für eine mikroporöse Polyolefinharzfolie, das die Schritte aufweist:
Ausstoßen eines geschmolzenen Harzes aus dem Mundstück (1) auf die Gießkühlvorrichtung (2) in einer Folienform, während die Herstellungsvorrichtung für eine mikroporöse Polyolefinharzfolie nach einem der Ansprüche 1 bis 3 verwendet wird;
Absaugen von Luft zwischen einer aus dem Mundstück (1) ausgestoßenen Folie (3) und der Gießkühlvorrichtung (2) mit dem Dekompressionskammer-Hauptkörper, um die Folie (3) und die Gießkühlvorrichtung (2) aneinander zu halten; und
Kühlen und Verfestigen der Folie (3), während die Folie (3) mit der Gießkühlvorrichtung (2) befördert wird.

5. Herstellungsverfahren für eine mikroporöse Polyolefinharzfolie nach Anspruch 4, wobei das Harz eine Mischung eines Polyolefinharzes und eines Verdünnungsmittels enthält, und die Fördergeschwindigkeit 3 m/min oder mehr beträgt.

## Revendications

1. Dispositif de fabrication pour une feuille de résine de polyoléfine microporeuse, comprenant :
une embouchure (1) pour le refoulement d'une résine contenant un mélange d'une résine de polyoléfine et d'un diluant sous la forme d'une feuille ;
un dispositif de refroidissement de coulée (2) pour le refroidissement et la solidification d'une feuille (3) refoulée par l'embouchure lors du transport de ladite feuille (3) ; et
une chambre de décompression (4) installée en amont de l'embouchure (1) dans la direction de transport du dispositif de refroidissement de coulée (2), pour l'aspiration de l'air entre la feuille (3) refoulée par l'embouchure (1) et le dispositif de refroidissement de coulée (2), la chambre de décompression (4) comprenant une plaque de séparation (5) prévue dans le sens de la largeur de feuille à proximité d'une partie d'ouverture opposée à l'embouchure (1) ;
**caractérisé en ce que** ledit dispositif de fabrication comprend en outre
un plaque de rectification (6) installée en aval d'une lèvre de l'embouchure (1) dans la direction de transport du dispositif de refroidissement de coulée (2) et plus extérieurement qu'une partie d'extrémité dans le sens de la largeur de la feuille (3) refoulée par la lèvre, pour combler un interstice entre la feuille (3) refoulée par l'embouchure (1) et une surface moulée ; et
**en ce que** la chambre de décompression comprend en outre un élément d'étanchéité (7b) prévu dans au moins une partie périphérique d'une surface opposée au dispositif de refroidissement de coulée (2), et en contact physique avec le dispositif de refroidissement de coulée (2).

2. Dispositif de fabrication pour une feuille de résine de polyoléfine microporeuse selon la revendication 1, où le corps principal de la chambre de décompression comprend :
une plaque supérieure (4a) inclinée vers le bas par rapport à une direction horizontale, vers un côté amont dans la direction de transport du dispositif de refroidissement de coulée (2), et dont l'angle d'inclinaison par rapport à la direction horizontale est constant ou augmente en allant vers le côté amont dans la direction de transport du dispositif de refroidissement de coulée (2) ; et
une plaque de réception (9) s'étendant depuis la plaque supérieure (4a) et sur toute la largeur du corps principal de la chambre de décompression en dessous d'un orifice d'aspiration du corps principal de la chambre de décompression.

3. Dispositif de fabrication pour une feuille de résine de polyoléfine microporeuse selon la revendication 1 ou la revendication 2, où l'élément d'étanchéité (7b) est une résine ou un caoutchouc poreux.

4. Procédé de fabrication pour une feuille de résine de polyoléfine microporeuse, comprenant les étapes suivantes :
refoulement d'une résine fondue par l'embouchure (1) sur le dispositif de refroidissement de coulée (2) sous la forme d'une feuille, en recourant au dispositif de fabrication pour une feuille de résine de polyoléfine microporeuse selon l'une des revendications 1 à 3 ;
aspiration de l'air entre une feuille (3) refoulée par l'embouchure (1) et le dispositif de refroidissement de coulée (2) par le corps principal de la chambre de décompression pour faire adhérer la feuille (3) au dispositif de refroidissement de coulée (2) ; et
refroidissement et solidification de la feuille (3) en transportant la feuille (3) par le dispositif de refroidissement de coulée (2).

5. Procédé de fabrication pour une feuille de résine de polyoléfine microporeuse selon la revendication 4, où la résine contient un mélange d'une résine de polyoléfine et d'un diluant, et où la vitesse de transport est égale ou supérieure à 3 m/min.
